# FASCICULE DE BREVET EUROPEEN

(11) **EP 4 025 781 B1**
(45) Date de publication et mention de la délivrance du brevet: **28.01.2026**
(21) Numéro de dépôt: 20775914.3
(22) Date de dépôt: 02.09.2020
(51) Int. Cl.: F02K 1/72, F02K 1/76

(54) **INVERSEUR DE POUSSÉE COMPRENANT UN UNIQUE VÉRIN DE COMMANDE DE CAPOT MOBILE**
SCHUBUMKEHRVORRICHTUNG, DIE EIN EINZIGES STELLGLIED ZUR STEUERUNG EINER BEWEGLICHEN VERKLEIDUNG UMFASST
THRUST REVERSER COMPRISING A SINGLE ACTUATOR FOR CONTROLLING A MOBILE COWLING

(30) Priorité: 05.09.2019 FR 1909767
(43) Date de publication de la demande: 13.07.2022
(73) Titulaire: Safran Nacelles, 76700 Gonfreville-l'Orcher (FR)
(72) Inventeur: CARUEL, Pierre, Charles, 77550 MOISSY-CRAMAYEL (FR); CHARLIAC, Fabien, 77550 MOISSY-CRAMAYEL (FR); BRAVIN, Fabien, 77550 MOISSY-CRAMAYEL (FR); CHAPELAIN, Loïc, 77550 MOISSY-CRAMAYEL (FR)
(74) Mandataire: Santarelli
(86) Numéro de dépôt international: PCT/FR2020/051519
(87) Numéro de publication internationale: WO 2021/044096

(56) Documents cités:
- FR-A1- 2 382 593
- US-A- 3 419 218
- US-A1- 2014 061 332
- US-A1- 2016 186 688

## Description

### Domaine technique

L'invention se rapporte au domaine des inverseurs de poussée pour ensemble propulsif d'aéronef, en particulier des inverseurs à grilles. L'invention concerne plus spécifiquement le système d'actionnement et de guidage d'une structure externe mobile annulaire d'un tel inverseur. Un tel système est par exemple connu du document US 2014/061332 A1.

### État de la technique antérieure

Un inverseur de poussée à grilles comprend généralement une structure externe mobile entre une position de fermeture et une position d'ouverture. Le déplacement de la structure externe mobile entre ces positions consiste généralement en une translation de cette structure le long d'un axe sensiblement parallèle à l'axe du moteur.

En position de fermeture, la structure externe mobile est configurée pour guider un écoulement de fluide dans l'ensemble propulsif en direction d'une tuyère d'éjection de manière à générer une poussée servant à propulser l'aéronef.

En position d'ouverture, la structure externe mobile dégage une ouverture radiale dans laquelle sont placées les grilles, de manière à rediriger vers l'avant de l'ensemble propulsif une partie de l'écoulement de fluide et générer ainsi une contre-poussée de freinage.

Les inverseurs à grilles équipent généralement des ensembles propulsifs équipés d'un turboréacteur à double flux. Dans un tel ensemble propulsif, un flux primaire circule dans une veine primaire traversant le générateur de gaz du turboréacteur et un flux secondaire circule dans une veine secondaire entourant le générateur de gaz.

Un tel inverseur peut être configuré de sorte que l'écoulement de fluide qu'il redirige pour produire la contre-poussée comprenne soit une partie du flux secondaire soit un mélange des flux primaire et secondaire.

Dans ce dernier cas, il est connu d'utiliser une structure externe mobile de forme annulaire, c'est-à-dire comprenant un périmètre circonférentiellement fermé, ce qui est possible compte tenu du positionnement de cette structure en aval de l'ensemble propulsif, et en particulier en aval de la partie de l'ensemble propulsif qui est fixée au mât.

Par rapport aux structures externes mobiles réalisées en plusieurs capots distincts, une structure externe mobile annulaire permet notamment de réduire les perturbations de l'écoulement de fluide générant la poussée lorsque cette structure est en position de fermeture, et de conduire les efforts de pression via des contraintes uniquement tangentielles dans la structure.

La commande de la position d'une telle structure externe mobile est généralement réalisée par une pluralité de vérins, et son guidage par des moyens de guidage respectivement répartis sur la circonférence de l'ensemble propulsif.

Un défaut de synchronisation des vérins, par exemple en cas de grippage de l'un de ces vérins, peut générer des efforts parasites entravant le déplacement de la structure externe mobile et tendant ainsi à endommager l'inverseur et à réduire les performances de l'ensemble propulsif. Cela nécessite de synchroniser les vérins entre eux, notamment en les équipant de vis à billes.

De plus, les systèmes conventionnels d'actionnement et de guidage d'une telle structure externe mobile sont relativement complexes et augmentent le coût et la masse de l'inverseur.

### Exposé de l'invention

L'invention vise à simplifier l'architecture d'un inverseur de poussée tel que décrit ci-dessus en remédiant à tout ou partie des inconvénients précités.

A cet effet, l'invention a pour objet un inverseur de poussée pour ensemble propulsif d'aéronef, cet inverseur comprenant les caractéristiques de la revendication 1.

Autrement dit, le déplacement de la structure externe mobile est réalisé uniquement par cet actionneur, sans assistance d'un autre vérin.

La commande de la position de la structure externe mobile à l'aide d'un unique actionneur simplifie la structure et le fonctionnement de l'inverseur et permet de réduire sa masse et son coût.

En particulier, l'invention permet ainsi d'éviter les problèmes de synchronisation rencontrés dans les systèmes d'actionnement multi-vérins conventionnels.

Dans le présent document, un plan longitudinal médian est un plan fictif qui passe par l'axe central longitudinal.

Il en résulte que l'actionneur et le dispositif de guidage principal sont positionnés circonférentiellement au même niveau l'un par rapport à l'autre.

Cela permet notamment de simplifier l'architecture globale des moyens de commande et de guidage de la structure externe mobile.

Le positionnement de rails de guidage de part et d'autre de l'actionneur permet, lors du déplacement de la structure externe mobile par cet actionneur, d'éviter l'application sur cette structure d'un moment susceptible d'entraver ou de bloquer son déplacement.

Cette configuration permet par ailleurs de réduire l'encombrement global du dispositif de guidage principal et de l'actionneur.

Dans un mode de réalisation, l'actionneur peut être le vérin configuré pour placer la structure externe mobile en position d'ouverture lorsque le vérin est rétracté et pour placer la structure externe mobile en position de fermeture lorsque le vérin est déployé.

En situation de vol, la structure externe mobile est soumise à des efforts aérodynamiques nécessitant une force plus importante pour déplacer cette structure de la position d'ouverture vers la position de fermeture que dans le sens inverse.

Or la force susceptible d'être appliquée par un vérin est généralement plus importante lors de son déploiement que lors de sa rétraction, compte tenu du volume respectif des chambres correspondantes.

Une telle configuration du vérin permet par conséquent de réduire ses dimensions et donc la masse de l'inverseur.

De préférence, une partie fixe du vérin peut être reliée à une extrémité arrière de la coulisse.

Dans un mode de réalisation, l'inverseur peut comprendre au moins un dispositif de guidage auxiliaire agencé pour guider la structure externe mobile lors de son déplacement entre les positions de fermeture et d'ouverture.

Dans le cadre de ce mode de réalisation, le dispositif de guidage principal est de préférence agencé pour guider la structure externe mobile de concert avec le dispositif de guidage auxiliaire lors de son déplacement entre les positions de fermeture et d'ouverture.

De préférence, le dispositif de guidage auxiliaire peut être positionné d'un côté du premier plan longitudinal médian opposé au côté où est situé l'actionneur, le dispositif de guidage auxiliaire pouvant être traversé par ledit deuxième plan longitudinal médian.

Autrement dit, le dispositif de guidage auxiliaire peut être positionné sensiblement en vis-à-vis de l'actionneur et du dispositif de guidage principal par rapport à l'axe central longitudinal de la structure externe mobile.

Un tel dispositif de guidage auxiliaire peut notamment présenter un intérêt dans un inverseur de grande dimension, c'est-à-dire un inverseur dont la structure externe mobile a typiquement un diamètre supérieur ou égal à 1 m.

La présence d'un dispositif de guidage auxiliaire à l'opposé du dispositif de guidage principal et de l'actionneur permet de limiter les déformations de cette structure externe mobile.

Un tel dispositif de guidage auxiliaire est toutefois optionnel dans la mesure où le dispositif de guidage principal situé au niveau de l'actionneur peut être dimensionné pour limiter de manière satisfaisante les phénomènes de coincement ou d'arc-boutement, au moins dans un inverseur de dimension petite ou moyenne dans lequel la structure externe mobile a typiquement un diamètre inférieur à 1 m.

Dans un mode de réalisation, l'inverseur peut comprendre des butées de fin de course configurées pour retenir axialement la structure externe mobile en position d'ouverture, l'une desdites butées de fin de course étant située du même côté du premier plan longitudinal médian que l'actionneur et étant centrée par rapport au deuxième plan longitudinal médian.

L'invention a aussi pour objet un ensemble propulsif d'aéronef comprenant un inverseur de poussée tel que défini ci-dessus.

Dans un mode de réalisation, l'ensemble propulsif peut comprendre un mât d'accrochage de cet ensemble propulsif à une voilure ou un fuselage dudit aéronef, le mât comprenant un carénage abritant l'actionneur et le dispositif de guidage principal.

L'invention a aussi pour objet un aéronef comprenant au moins un ensemble propulsif tel que décrit ci-dessus.

De préférence, l'aéronef peut comprendre deux ensembles propulsifs tels que décrits ci-dessus montés sur une partie arrière d'un fuselage de cet aéronef.

Une telle configuration permet notamment de réduire ou annuler l'impact de l'actionneur et du dispositif de guidage principal sur les lignes aérodynamiques de l'ensemble propulsif.

Une telle configuration permet aussi de maximiser la longueur de la coulisse du dispositif de guidage principal et, par suite, de relier la partie fixe du vérin à l'extrémité arrière de cette coulisse.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique d'un aéronef conforme à l'invention ;
[Fig. 2] est une vue schématique en coupe axiale d'un ensemble propulsif conforme à l'invention ;
[Fig. 3] est une vue schématique en perspective d'une partie d'un inverseur de poussée selon un premier mode de réalisation de l'invention, cette figure montrant un vérin de commande d'une structure externe mobile de l'inverseur ainsi qu'une coulisse d'un dispositif de guidage principal de cette structure externe mobile, l'inverseur étant dans une configuration de poussée directe dans laquelle la structure externe mobile est dans une position de fermeture ;
[Fig. 4] est une vue schématique en perspective de l'inverseur de la figure 3, l'inverseur étant dans une configuration d'inversion de poussée dans laquelle la structure externe mobile est dans une position d'ouverture ;
[Fig. 5] est une vue schématique en perspective de l'inverseur de la figure 3 en configuration d'inversion de poussée, cette figure montrant un élément de carénage d'un mât ainsi qu'une pièce de glissement du dispositif de guidage principal ;
[Fig. 6] est une vue schématique en perspective de l'inverseur de la figure 3 en configuration de poussée directe, cette figure montrant la pièce de glissement du dispositif de guidage principal ainsi qu'un carénage externe recouvrant des grilles de l'inverseur ;
[Fig. 7] est une vue schématique en perspective de l'inverseur de la figure 3 en configuration de poussée directe, cette figure montrant la pièce de glissement du dispositif de guidage principal ainsi que le carénage externe recouvrant des grilles de l'inverseur ;
[Fig. 8] est une vue schématique d'une partie d'un inverseur de poussée selon un deuxième mode de réalisation de l'invention qui se distingue du premier mode de réalisation en ce qu'il comprend un dispositif de guidage auxiliaire, l'inverseur étant en configuration d'inversion de poussée, cette figure montrant un carénage interne permettant de recouvrir les grilles radialement à l'intérieur lorsque l'inverseur est en configuration de poussée directe.

### Description détaillée de modes de réalisation

Chacune des figures décrites ci-après comprend un référentiel X, Y et Z définissant respectivement des directions latérale, verticale et longitudinale.

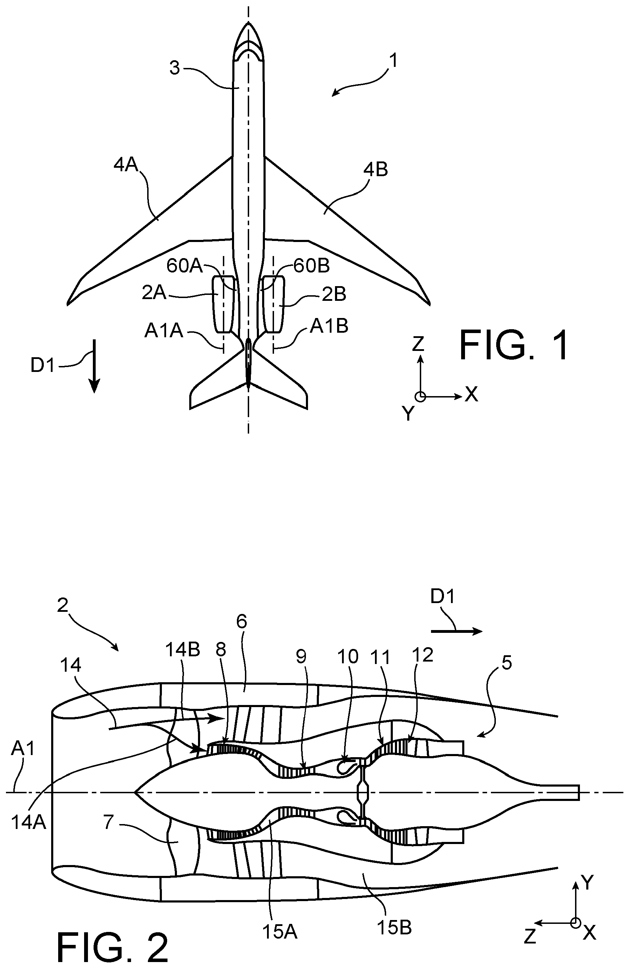

Il est représenté à la figure 1 un avion 1 comprenant deux ensembles propulsifs 2A et 2B montés via des mâts 60A et 60B sur la partie arrière du fuselage 3, en aval des ailes 4A et 4B.

Dans la présente description, les termes « amont », « aval », « avant » et « arrière » sont définis par rapport à un sens D1 d'écoulement d'air par rapport à l'avion 1 lorsque celui-ci est propulsé, le sens D1 étant opposé au sens du déplacement de l'avion 1.

Les ensembles propulsifs 2A et 2B s'étendent chacun le long d'un axe central longitudinal A1A, A1B sensiblement parallèle à la direction longitudinale Z, de sorte que l'air et les gaz traversant ces ensembles propulsifs 2A et 2B et contribuant à la propulsion de l'avion 1 circulent dans ces ensembles dans le sens D1.

Dans cet exemple, chacun des ensembles propulsifs 2A et 2B est similaire à l'ensemble propulsif 2 illustré à la figure 2.

De manière connue en soi, l'ensemble propulsif 2 de la figure 2 comprend une turbomachine 5 carénée par une nacelle 6. Dans cet exemple, la turbomachine 5 est un turboréacteur à double corps et à double flux.

Le turboréacteur 5 présente un axe central longitudinal A1 autour duquel s'étendent ses différents composants, en l'occurrence, de l'avant vers l'arrière du turboréacteur 5, une soufflante 7, un compresseur basse pression 8, un compresseur haute pression 9, une chambre de combustion 10, une turbine haute pression 11 et une turbine basse pression 12. Les compresseurs 8 et 9, la chambre de combustion 10 et les turbines 11 et 12 forment un générateur de gaz.

Lors du fonctionnement du turboréacteur 5, un écoulement d'air 14 pénètre dans l'ensemble propulsif 2 par une entrée d'air en amont de la nacelle 6, traverse la soufflante 7 puis se divise en un flux primaire 14A central et un flux secondaire 14B. Le flux primaire 14A s'écoule dans une veine primaire 15A de circulation des gaz traversant le générateur de gaz. Le flux secondaire 14B s'écoule dans une veine secondaire 15B entourant le générateur de gaz et délimitée radialement vers l'extérieur par la nacelle 6.

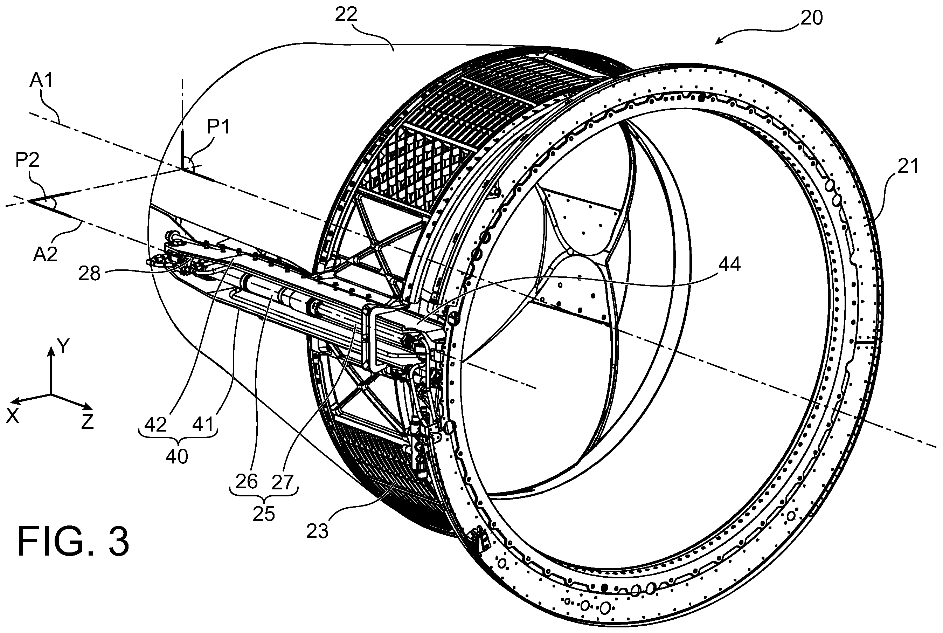

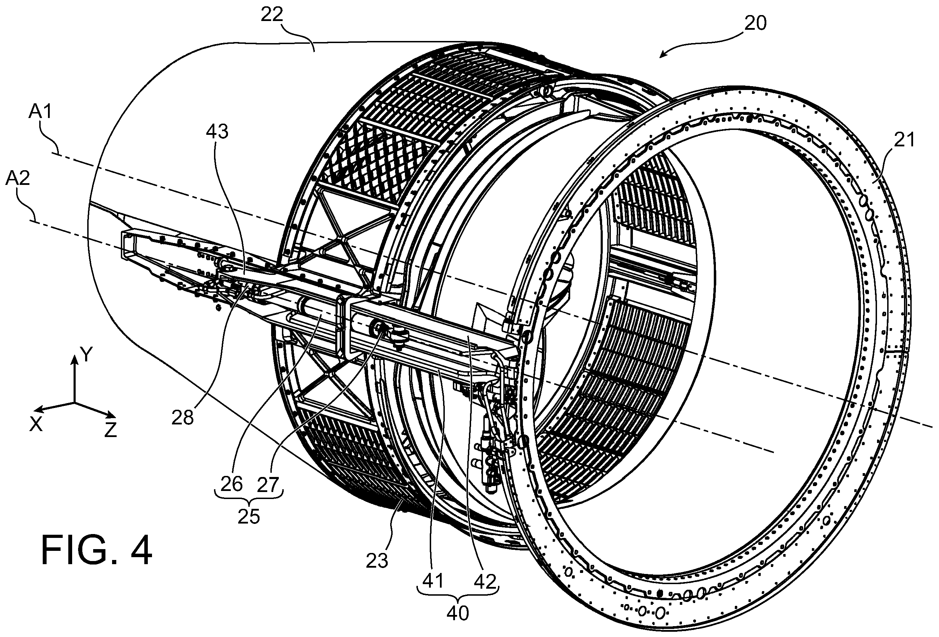

L'invention se rapporte plus spécifiquement à un inverseur de poussée 20 tel qu'illustré aux figures 3 et 4, cet inverseur 20 ayant pour fonction d'inverser une partie de la poussée générée par un tel ensemble propulsif 2 afin de freiner l'avion 1 lors de son atterrissage.

L'inverseur 20 peut bien entendu équiper un ensemble propulsif différent de celui de la figure 2 sans sortie du cadre de l'invention.

En référence à la figure 3, l'inverseur 20 comprend une structure fixe comportant notamment un cadre avant 21. Dans cet exemple, le cadre avant 21 est notamment destiné à relier l'inverseur 20 à la nacelle 6 de l'ensemble propulsif 2, par fixation de ce cadre avant 21 sur un cadre arrière (non représenté) de la nacelle 6.

L'inverseur 20 comprend par ailleurs une structure externe mobile 22 formant un capot mobile en translation axiale selon l'axe A1 par rapport à la structure fixe 21.

L'axe A1 correspond ici à la fois à un axe central longitudinal de l'inverseur 20, à l'axe central longitudinal du turboréacteur 5 ainsi qu'à un axe central longitudinal de l'ensemble propulsif 2.

La structure externe mobile 22 est dans cet exemple une structure annulaire d'axe A1 réalisée d'une seule pièce.

L'expression « structure annulaire » désigne une structure comprenant un périmètre circonférentiellement fermé, c'est-à-dire une structure continue sur deux pi radians, au moins sur une portion longitudinale de cette structure 22.

L'inverseur 20 comprend par ailleurs des grilles 23 configurées pour orienter vers l'avant de l'ensemble propulsif 2 le flux de fluide dévié pour générer la contre-poussée (voir plus loin ci-dessous).

Dans le mode de réalisation des figures 3 et 4, les grilles 23 sont solidaires de la structure externe mobile 22. Dans un mode de réalisation non représenté, les grilles 23 sont solidaires de la structure fixe de l'inverseur 20.

Dans cet exemple, l'inverseur de poussée 20 est destiné à être monté à l'arrière de l'ensemble propulsif 2 de manière à générer une contre-poussée à partir d'un flux mélangé comprenant un mélange des flux primaire 14A et secondaire 14B sortant respectivement de la veine primaire 15A et de la veine secondaire 15B de l'ensemble propulsif 2.

La figure 3 montre l'inverseur 20 dans une configuration de poussée directe, dans laquelle la structure externe mobile 22 est dans une position de fermeture, c'est-à-dire dans une position avancée par rapport au cadre avant 21 de la structure fixe.

En position de fermeture, la structure externe mobile 22 contribue au guidage des flux primaire 14A et secondaire 14B vers une sortie d'éjection en aval de l'ensemble propulsif 2 de manière à générer une poussée.

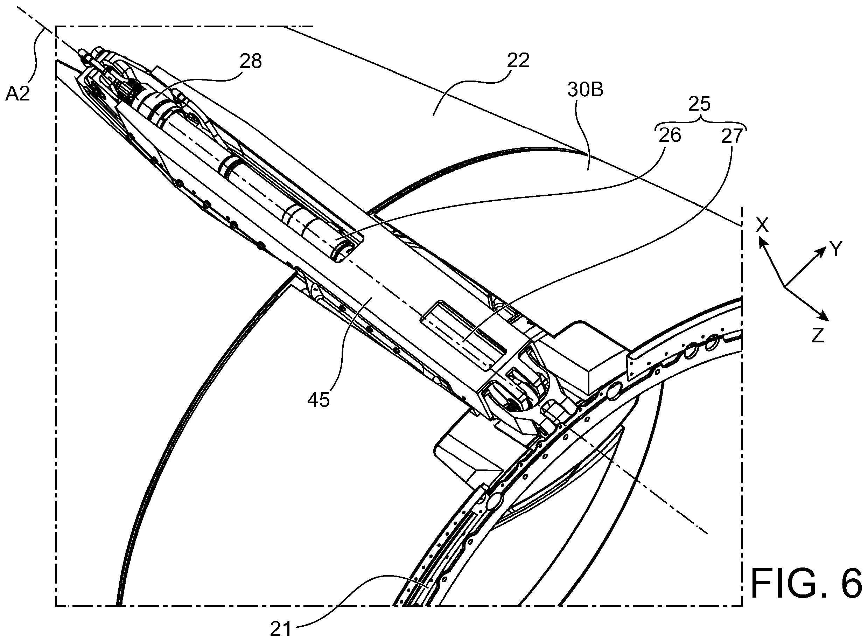

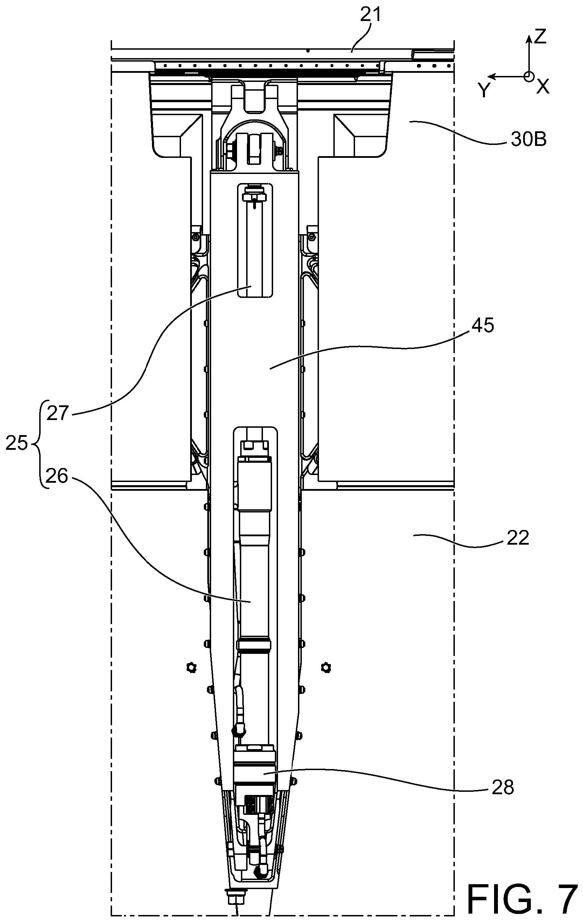

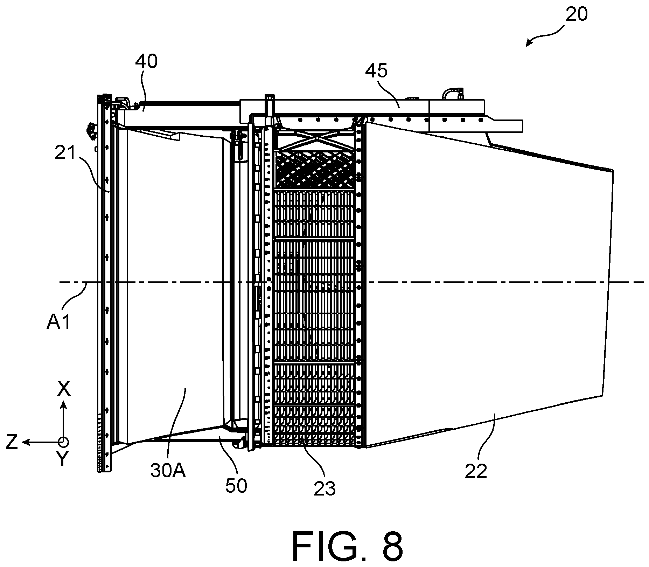

En configuration de poussée directe, les grilles 23 sont couvertes, en l'occurrence radialement à l'intérieur par une structure interne 30A (visible sur la figure 8) et radialement à l'extérieur par un carénage externe 30B (visible sur les figures 6 et 7). Cette structure interne 30A et ce carénage externe 30B sont solidaires du cadre avant 21. La structure interne 30A est notamment configurée pour empêcher le fluide circulant dans l'ensemble propulsif 2 d'accéder aux grilles 23 et donc de sortir de l'ensemble propulsif 2 via les grilles 23.

La figure 4 montre l'inverseur 20 dans une configuration d'inversion de poussée, dans laquelle la structure externe mobile 22 est dans une position d'ouverture, c'est-à-dire dans une position reculée par rapport au cadre avant 21 de la structure fixe.

En position d'ouverture, la structure externe mobile 22 dégage une ouverture radiale permettant d'évacuer le flux mélangé afin de générer une contre-poussée.

Dans cet exemple, l'ouverture radiale est constituée par des ouvertures des grilles 23, étant entendu que l'espace axialement situé entre les grilles 23 et le cadre avant 21 reste obturé par la structure interne 30A et le carénage externe 30B, puisque ceux-ci sont solidaires du cadre avant 21 (voir figures 6 et 8).

Dans un mode de réalisation non représenté, l'inverseur 20 peut ne pas comprendre de grilles 23, l'ouverture radiale pouvant ainsi être constituée par un espace vide correspondant sensiblement en l'espace occupé par les grilles 23 dans le mode de réalisation des figures 3 et 4.

L'utilisation de grilles 23 est généralement préférable car celles-ci permettent de maximiser la composante axiale du flux en sortie de l'ouverture radiale et par conséquent d'augmenter l'effort de contre-poussée, compte tenu typiquement de la forme incurvée des aubes (non représentées) délimitant les ouvertures des grilles 23.

La réorientation des flux primaire 14A et secondaire 14B en direction des grilles 23 est réalisée par tout moyen conventionnel, par exemple à l'aide de volets pivotants (non représentés) reliés d'une part à la structure externe mobile 22 et d'autre part à la structure fixe de l'inverseur 20 de manière à se déployer radialement dans l'ensemble propulsif 2 lorsque la structure externe mobile 22 est ouverte et à se rétracter lorsque celle-ci est fermée.

Le déplacement de la structure externe mobile 22 entre les positions de fermeture et d'ouverture est réalisé par un unique actionneur 25.

En référence à la figure 3, l'actionneur unique 25 est un unique vérin s'étendant le long d'un axe d'actionnement A2 sensiblement parallèle à l'axe central longitudinal A1.

De manière connue en soi, le vérin 25 comprend un corps 26 formant une partie fixe de ce vérin 25 et une tige 27 formant une partie mobile de ce vérin 25.

La tige 27 est solidaire d'un piston (non représenté) logé dans un volume intérieur cylindrique (non représenté) du corps 26, le piston séparant ce volume cylindrique en deux chambres hermétiques et isolées l'une par rapport à l'autre. Le volume de ces deux chambres n'est pas identique puisque l'une d'elle est traversée par la tige 27 reliée au piston.

L'introduction d'un fluide sous pression dans la chambre la plus grande, ou grande chambre, permet de déplacer le piston et la tige 27 dans un premier sens de déplacement le long de l'axe A2 entraînant un déploiement du vérin 25. L'introduction d'un fluide sous pression dans la chambre la plus petite, ou petite chambre, permet le déplacement du piston et de la tige 27 dans un deuxième sens de déplacement le long de l'axe A2 entraînant une rétractation du vérin 25.

Le corps 26 comprend deux extrémités axiales, en l'occurrence une extrémité avant située du côté de la tige 27 et une extrémité arrière opposée à l'extrémité avant.

En référence aux figures 3 et 4, le vérin 25 est configuré pour placer la structure externe mobile 22 en position d'ouverture lorsque le vérin 25 est rétracté et pour placer la structure externe mobile 22 en position de fermeture lorsque le vérin 25 est déployé.

Pour ce faire, le corps 26 du vérin 25 est dans cet exemple relié à la structure fixe de l'inverseur 20 par son extrémité arrière 28 et le vérin 25 est orienté vers l'avant de l'inverseur 20, c'est-à-dire vers le cadre avant 21. L'extrémité libre de la tige 27, c'est-à-dire l'extrémité opposée à celle qui est reliée au piston, est quant à elle reliée à une pièce 45 solidaire de la structure externe mobile 22 (voir plus loin ci-dessous).

Une telle configuration du vérin 25 permet de réduire ses dimensions puisque l'effort fourni par ce vérin lors de la pressurisation de la grande chambre est utilisé pour fermer, sur-escamoter et ralentir l'ouverture de la structure externe mobile 22, tandis que l'effort fourni lors de la pressurisation de la petite chambre est utilisé pour ouvrir la structure externe mobile 22. L'effort nécessaire pour fermer la structure externe mobile 22 est en effet plus important que l'effort à fournir pour ouvrir cette structure 22, celle-ci étant notamment soumise à des forces aérodynamiques ayant une composante axiale orientée de l'amont vers l'aval.

Le guidage de la structure externe mobile 22 lors de son déplacement entre les positions de fermeture et d'ouverture est assuré par un dispositif de guidage principal comprenant dans cet exemple une coulisse 40 formée par deux rails 41 et 42 solidaires de la structure fixe de l'inverseur 20. Les rails 41 et 42 sont visibles sur les figures 3 à 5.

Les rails 41 et 42 s'étendent parallèlement à l'axe d'actionnement A2, de part et d'autre du vérin 25, de sorte que ce dernier est logé entre les rails 41 et 42.

Plus précisément, le vérin 25 est logé dans la coulisse 40 sur toute sa longueur. D'une part, l'extrémité arrière 28 du corps 26 du vérin 25 est reliée à une extrémité arrière 43 de la coulisse 40 (voir figure 4). D'autre part, les rails 41 et 42 sont dimensionnés de manière à s'étendre de part et d'autre de la tige 27, y compris lorsque le vérin 25 est déployé. Lorsque le vérin 25 est déployé, ladite extrémité libre de la tige 27 est axialement située au niveau d'une extrémité avant 44 de la coulisse 40 (voir figure 3).

Le dispositif de guidage principal comprend par ailleurs une pièce de glissement 45 solidaire de la structure externe mobile 22.

En référence à la figure 6, la pièce de glissement 45 est reliée à la structure externe mobile 22 de manière à s'étendre radialement vers l'extérieur de cette structure 22.

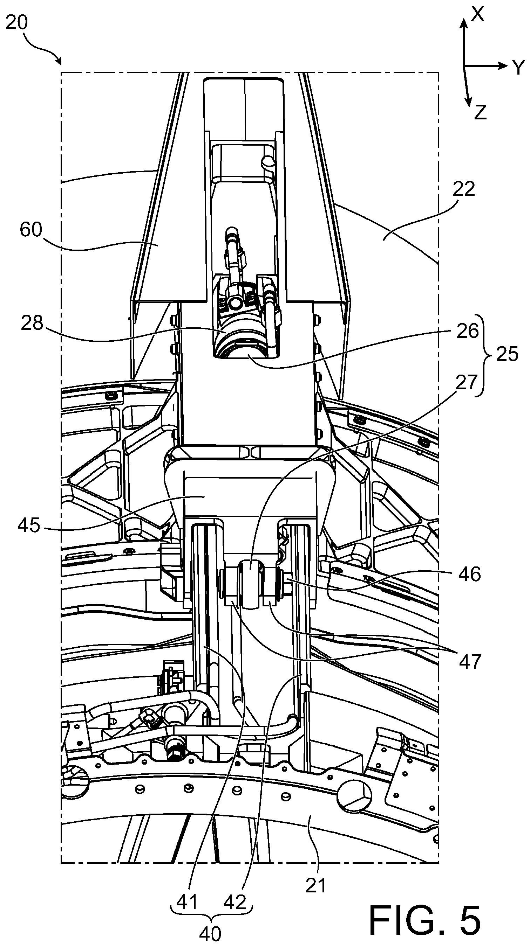

La pièce de glissement 45 a une forme complémentaire à celle des rails 41 et 42 (voir figure 5) permettant son glissement le long de la coulisse 40 lorsque la structure externe mobile 22 est déplacée entre les positions de fermeture et d'ouverture, et assurant ainsi le guidage de la structure externe mobile 22 lors d'un tel déplacement.

En référence à la figure 5, la pièce de glissement 45 est dans cet exemple reliée à la tige 27 du vérin 25 au moyen d'un axe d'entraînement 46 s'étendant perpendiculairement par rapport à l'axe d'actionnement A2. L'axe d'entraînement 46 traverse à la fois un orifice (non représenté) réalisé dans ladite extrémité libre de la tige 27 et des orifices (non représentés) réalisés dans un organe de liaison 47 de la pièce de glissement 45. L'organe de liaison 47 comprend ici deux pattes s'étendant de part et d'autre de l'extrémité libre de la tige 27.

Dans le mode de réalisation des figures 3 à 7, le dispositif de guidage principal décrit ci-dessus est unique, au sens où il assure seul la fonction de guidage de la structure externe mobile 22 lors de son déplacement entre les positions de fermeture et d'ouverture.

Le mode de réalisation de la figure 8 se distingue de celui des figures 3 à 7 uniquement en ce que la fonction de guidage est assurée simultanément par un dispositif de guidage principal et un dispositif de guidage auxiliaire 50.

Le dispositif de guidage principal est identique au dispositif de guidage décrit ci-dessus en référence au mode de réalisation des figures 3 à 7.

Le dispositif de guidage auxiliaire 50 comprend de manière conventionnelle des rails solidaires de la structure fixe de l'inverseur 20 et une pièce de glissement solidaire de la structure externe mobile 22.

Afin de localiser les uns par rapport aux autres l'actionneur 25 et le ou les dispositifs de guidage des modes de réalisation décrits ci-dessus, il est représenté à la figure 3 deux plans longitudinaux médians P1 et P2.

Chacun de ces plans fictifs est un plan médian au sens où il passe par l'axe A1 qui est un axe central de l'inverseur 20, et un plan longitudinal puisque l'axe A1 est aussi un axe longitudinal parallèle à la direction longitudinale Z.

En référence à la figure 3, le plan P2 passe aussi par l'axe d'actionnement A2 du vérin 25, et le plan P1 est perpendiculaire au plan P2.

Ainsi, le vérin 25 et le dispositif de guidage principal du mode de réalisation des figures 3 à 7 sont tous deux situés d'un même côté du plan P1 et traversés par le plan P2.

Comme indiqué plus haut, les rails 41 et 42 sont situés de part et d'autre du vérin 25 et par conséquent du plan P2. Bien qu'aucun de ces rails 41 et 42 ne soit en tant que tel traversé par le plan P2, le dispositif de guidage principal, qui comprend les deux rails 41 et 42 et la pièce de glissement 45, est dans son ensemble traversé par le plan P2.

Dans le mode de réalisation de la figure 8, le vérin, le dispositif de guidage principal et le dispositif de guidage auxiliaire 50 sont tous trois traversés par le plan P2, par analogie avec ce qui vient d'être décrit. De même, le vérin et le dispositif de guidage principal sont tous deux situés d'un premier côté du plan P1. Le dispositif de guidage auxiliaire est situé d'un deuxième côté du plan P1, opposé au premier côté de ce plan.

Dans un mode de réalisation non représenté, l'inverseur 20 est similaire à celui du mode de réalisation des figures 3 à 7 et comprend en outre plusieurs dispositifs de guidage auxiliaires similaire au dispositif de guidage auxiliaire 50 de la figure 8 mais non traversés par le plan P2. Par exemple, ces dispositifs de guidage auxiliaires peuvent être positionnés symétriquement dudit deuxième côté du plan P1 et de part et d'autre du plan P2.

En référence à la figure 5, l'actionneur 25 et le dispositif de guidage principal sont dans cet exemple abrités par un carénage 60 d'un mât (non représenté sur cette figure) d'accrochage de l'ensemble propulsif 2 au fuselage 3 de l'avion 1, ou plus généralement à un mât d'accrochage de l'ensemble propulsif 2 à un aéronef.

Les modes de réalisation qui viennent d'être décrits ne sont nullement limitatifs. Par exemple, l'inverseur 20 peut comprendre des butées de fin de course (non représentées) configurées pour retenir axialement la structure externe mobile 22 en position d'ouverture. Dans un mode de réalisation, l'une de ces butées est située du même côté du plan P1 que l'actionneur 25 et est centrée par rapport au plan P2. Les autres butées peuvent être positionnées à équidistance les unes par rapport aux autres de sorte que chacune d'elle soit traversée soit par le plan P1 soit par le plan P2.

## Revendications

1. Inverseur de poussée (20) à grilles (23) pour ensemble propulsif (2) d'aéronef (1), cet inverseur (20) comprenant :
- une structure externe (22) annulaire présentant un axe central longitudinal (A1) et étant mobile en translation axiale selon cet axe central longitudinal (A1) entre une position de fermeture, dans laquelle celle-ci est apte à guider un écoulement de fluide dans l'ensemble propulsif (2) de manière à générer une poussée, et une position d'ouverture dans laquelle la structure externe mobile (22) dégage une ouverture radiale apte à évacuer une partie dudit écoulement de fluide de l'ensemble propulsif (2) de manière à générer une contre-poussée,
- un dispositif de guidage principal (40, 45) agencé pour guider la structure externe mobile (22) lors de son déplacement entre les positions de fermeture et d'ouverture,
cet inverseur (20) étant **caractérisé en ce qu'**il comprend un unique actionneur (25), correspondant à un vérin unique comportant une tige (27) formant une partie mobile de ce vérin, le vérin unique (25) étant configuré pour déplacer la structure externe mobile (22) entre les positions de fermeture et d'ouverture, l'actionneur (25) et le dispositif de guidage principal (40, 45) étant tous deux situés d'un même côté d'un premier plan longitudinal médian (P1) et traversés par un deuxième plan longitudinal médian (P2) perpendiculaire au premier plan longitudinal médian (P1),
le dispositif de guidage principal comprenant une coulisse (40) solidaire de l'un parmi la structure externe mobile (22) et une structure fixe (21) de l'inverseur (20), la coulisse (40) étant configurée pour permettre un glissement d'un élément (45) solidaire de l'autre parmi la structure externe mobile (22) et la structure fixe (21) le long de cette coulisse (40) lorsque la structure externe mobile (22) est déplacée entre les positions de fermeture et d'ouverture,
la coulisse (40) comprenant deux rails (41, 42) entre lesquels est logé le vérin unique (25).

2. Inverseur de poussée (20) selon la revendication 1, dans lequel l'actionneur est le vérin (25) configuré pour placer la structure externe mobile (22) en position d'ouverture lorsque le vérin (25) est rétracté et pour placer la structure externe mobile (22) en position de fermeture lorsque le vérin (25) est déployé.

3. Inverseur de poussée (20) selon la revendication 2, dans lequel une partie fixe (26) du vérin (25) est reliée à une extrémité arrière (43) de la coulisse (40).

4. Inverseur de poussée (20) selon l'une quelconque des revendications précédentes, cet inverseur (20) comprenant au moins un dispositif de guidage auxiliaire (50) agencé pour guider la structure externe mobile (22) lors de son déplacement entre les positions de fermeture et d'ouverture.

5. Inverseur de poussée (20) selon la revendication 4, dans lequel le dispositif de guidage auxiliaire (50) est positionné d'un côté du premier plan longitudinal médian (P1) opposé au côté où est situé l'actionneur (25), le dispositif de guidage auxiliaire (50) étant traversé par ledit deuxième plan longitudinal médian (P2).

6. Inverseur de poussée (20) selon l'une quelconque des revendications précédentes, cet inverseur (20) comprenant des butées de fin de course configurées pour retenir axialement la structure externe mobile (22) en position d'ouverture, l'une desdites butées de fin de course étant située du même côté du premier plan longitudinal médian (P1) que l'actionneur (25) et étant centrée par rapport au deuxième plan longitudinal médian (P2).

7. Ensemble propulsif (2) d'aéronef (1), cet ensemble propulsif (2) comprenant un inverseur de poussée (20) selon l'une quelconque des revendications précédentes.

8. Ensemble propulsif (2) selon la revendication 7, comprenant un mât (60A, 60B) d'accrochage de cet ensemble propulsif (2) à une voilure ou un fuselage (3) dudit aéronef (1), le mât (60A, 60B) comprenant un carénage (60) abritant l'actionneur (25) et le dispositif de guidage principal (40, 45).

## Patentansprüche

1. Schubumkehrvorrichtung (20) mit Gittern (23) für eine Antriebseinheit (2) eines Luftfahrzeugs (1), wobei diese Umkehrvorrichtung (20) umfasst:
- eine ringförmige äußere Struktur (22), die eine Längsmittelachse (A1) aufweist und entlang dieser Längsmittelachse (A1) axial zwischen einer Schließposition, in der diese imstande ist, eine Fluidströmung in der Antriebseinheit (2) zu leiten, um einen Schub zu erzeugen, und einer Öffnungsposition ist, in der die bewegliche äußere Struktur (22) eine radiale Öffnung freigibt, die imstande ist, einen Teil der Fluidströmung aus der Antriebseinheit (2) abzuleiten um einen Gegenschub zu erzeugen, verschiebbar ist,
- eine Hauptleitvorrichtung (40, 45), die angeordnet ist, um die bewegliche äußere Struktur (22) bei ihrer Bewegung zwischen der Schließ- und Öffnungspositionen zu leiten,
wobei diese Umkehrvorrichtung (20) **dadurch gekennzeichnet ist, dass** er eine einzige Betätigungsvorrichtung (25) umfasst, der einem einzigen Zylinder entspricht, der eine Stange (27) beinhaltet, die einen beweglichen Teil dieses Zylinders bildet, wobei der einzige Zylinder (25) konfiguriert ist, um die bewegliche äußere Struktur (22) zwischen der Schließ- und Öffnungsposition zu bewegen, wobei sich die Betätigungsvorrichtung (25) und die Hauptleitvorrichtung (40, 45) beide auf einer Seite einer ersten Längsmittelebene (P1) befinden und von einer zweiten Längsmittelebene (P2) senkrecht zu der ersten Längsmittelebene (P1) durchquert werden,
wobei die Hauptleitvorrichtung eine Führungsschiene (40) umfasst, die fest mit einer der beweglichen äußeren Struktur (22) und einer festen Struktur (21) der Umkehrvorrichtung (20) verbunden ist, wobei die Führungsschiene (40) konfiguriert ist, um ein Gleiten eines Elements (45), das fest mit dem anderen der beweglichen äußeren Struktur (22) und der festen Struktur (21) entlang dieser Kulisse (40) verbunden ist, zu ermöglichen, wenn die bewegliche äußere Struktur (22) zwischen der Schließ- und Öffnungsposition bewegt wird,
wobei die Führungsschiene (40) zwei Schienen (41, 42) umfasst, zwischen denen der Einzelzylinder (25) untergebracht ist.

2. Schubumkehrvorrichtung (20) nach Anspruch 1, wobei die Betätigungsvorrichtung der Zylinder (25) ist, der konfiguriert ist, um die bewegliche äußere Struktur (22) in die Öffnungsposition zu platzieren, wenn der Zylinder (25) eingefahren ist, und die bewegliche äußere Struktur (22) in die Schließposition zu platzieren, wenn der Zylinder (25) ausgefahren ist.

3. Schubumkehrvorrichtung (20) nach Anspruch 2, wobei ein fester Teil (26) des Zylinders (25) an ein hinteres Ende (43) der Führungsschiene (40) angeschlossen ist.

4. Schubumkehrvorrichtung (20) nach einem der vorstehenden Ansprüche, wobei diese Umkehrvorrichtung (20) mindestens eine Hilfsleitvorrichtung (50) umfasst, die angeordnet ist, um die bewegliche äußere Struktur (22) bei ihrer Bewegung zwischen der Schließ- und Öffnungsposition zu leiten.

5. Schubumkehrvorrichtung (20) nach Anspruch 4, wobei die Hilfsleitvorrichtung (50) auf einer Seite der ersten Längsmittelebene (P1) gegenüber der Seite positioniert ist, auf der sich die Betätigungsvorrichtung (25) befindet, wobei die Hilfsleitvorrichtung (50) von der zweiten Längsmittelebene (P2) durchquert wird.

6. Schubumkehrvorrichtung (20) nach einem der vorstehenden Ansprüche, wobei diese Umkehrvorrichtung (20) Endanschläge umfasst, die konfiguriert sind, um die bewegliche äußere Struktur (22) in der Öffnungsposition axial zurückzuhalten, wobei sich einer der Endanschläge auf der gleichen Seite der ersten Längsmittelebene (P1) wie die Betätigungsvorrichtung (25) befindet und in Bezug auf die zweite Längsmittelebene (P2) zentriert ist.

7. Antriebseinheit (2) für ein Luftfahrzeug (1), wobei diese Antriebseinheit (2) eine Schubumkehrvorrichtung (20) nach einem der vorstehenden Ansprüche umfasst.

8. Antriebseinheit (2) nach Anspruch 7, umfassend einen Mast (60A, 60B) zum Ankoppeln dieser Antriebseinheit (2) an einer Tragfläche oder einem Rumpf (3) des Luftfahrzeugs (1), wobei der Mast (60A, 60B) eine Verkleidung (60) umfasst, welche die Betätigungsvorrichtung (25) und die Hauptleitvorrichtung (40, 45) unterbringt.

## Claims

1. A cascade (23) thrust reverser (20) for a propulsion assembly (2) of an aircraft (1), this reverser (20) comprising:
- an annular outer structure (22) having a longitudinal central axis (A1) and being axially movable in translation along this longitudinal central axis (A1) between a closing position, in which the latter is capable of guiding a fluid flow into the propulsion assembly (2) so as to generate thrust, and an opening position in which the movable outer structure (22) clears a radial opening capable of discharging part of said fluid flow from the propulsion assembly (2) so as to generate a counter-thrust,
- a main guide device (40, 45) arranged to guide the movable outer structure (22) during its movement between the closing and opening positions,
this reverser (20) being **characterized in that** it comprises a single actuator (25), corresponding to a single ram comprising a rod (27) forming a movable part of this ram, the single ram (25) being configured to move the movable outer structure (22) between the closing and opening positions, the actuator (25) and the main guide device (40, 45) being both located on a same side of a first median longitudinal plane (P1) and through which a second median longitudinal plane (P2) perpendicular to the first median longitudinal plane (P1) passes,
the main guide device comprising a slider (40) integral with one of the movable outer structure (22) and a fixed structure (21) of the reverser (20), the slider (40) being configured to allow sliding of an element (45) integral with the other of the movable outer structure (22) and the fixed structure (21) along this slider (40) when the movable outer structure (22) is moved between the closing and opening positions,
the slider (40) comprising two rails (41, 42) between which the single ram (25) is housed.

2. The thrust reverser (20) according to claim 1, wherein the actuator is the ram (25) configured to place the movable outer structure (22) in the opening position when the ram (25) is retracted and to place the movable outer structure (22) in the closing position when the ram (25) is deployed.

3. The thrust reverser (20) according to claim 2, wherein a fixed portion (26) of the ram (25) is connected to a rear end (43) of the slider (40).

4. The thrust reverser (20) according to any one of the preceding claims, this reverser (20) comprising at least one auxiliary guide device (50) arranged to guide the movable outer structure (22) during its movement between the closing and opening positions.

5. The thrust reverser (20) according to claim 4, wherein the auxiliary guide device (50) is positioned on one side of the first median longitudinal plane (P1) opposite to the side where the actuator (25) is located, the auxiliary guide device (50) having said second median longitudinal plane (P2) passing therethrough.

6. The thrust reverser (20) according to any one of the preceding claims, this reverser (20) comprising travel limit stops configured to axially retain the movable outer structure (22) in the opening position, one of said travel limit stops being located on the same side of the first median longitudinal plane (P1) as the actuator (25) and being centered with respect to the second median longitudinal plane (P2) .

7. A propulsion assembly (2) of an aircraft (1), this propulsion assembly (2) comprising a thrust reverser (20) according to any one of the preceding claims.

8. The propulsion assembly (2) according to claim 7, comprising a mast (60A, 60B) for attaching this propulsion assembly (2) to an airfoil or fuselage (3) of said aircraft (1), the mast (60A, 60B) comprising a fairing (60) accommodating the actuator (25) and the main guide device (40, 45).
